(19) **Europäisches Patentamt**

**European Patent Office**

**Office européen des brevets**

(11) **EP 0 741 496 B1**

(12) **EUROPEAN PATENT SPECIFICATION**

(45) Date of publication and mention
of the grant of the patent:
**20.03.2002 Bulletin 2002/12**

(51) Int Cl.⁷: **H04N 7/26**, H04N 7/36

(21) Application number: **96302703.2**

(22) Date of filing: **17.04.1996**

(54) **System and method for focused-based image segmentation for video signals**

System und Methode für focusbasierte Bildsegmentation für Videosignale

Système et méthode de segmentation d'image basée sur la mise au point pour des signaux vidéo

(84) Designated Contracting States:
**DE FR GB**

(30) Priority: **25.04.1995 US 428265**

(43) Date of publication of application:
**06.11.1996 Bulletin 1996/45**

(73) Proprietor: **AT&T IPM Corp.**
**Coral Gables, Florida 33134 (US)**

(72) Inventors:
• **Chen, Tsuhan**
**Middletown, New Jersey 07748 (US)**
• **Swain, Cassandra Turner**
**Eatontown, New Jersey 07724 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(56) References cited:
**EP-A- 0 389 044**          **EP-A- 0 452 066**
**US-A- 5 225 940**

• SIVAN Z ET AL: "CHANGE DETECTION AND TEXTURE ANALYSIS FOR IMAGE SEQUENCE CODING" SIGNAL PROCESSING. IMAGE COMMUNICATION, vol. 6, no. 4, 1 August 1994 (1994-08-01), pages 357-376, XP000458727 ISSN: 0923-5965
• SAGHRI J A ET AL: "FEATURE-BASED IMAGE BANDWIDTH COMPRESSION" OPTICAL ENGINEERING, vol. 27, no. 10, 1 October 1988 (1988-10-01), pages 854-860, XP000118255 ISSN: 0091-3286
• ZHANG W ET AL: "AN EXTENSION OF MARR'S SIGNATURE BASED EDGE CLASSIFICATION AND OTHER METHODS DETERMINING DIFFUSENESS AND HEIGHT OF EDGES, AND BAR EDGE WIDTH" , PROCEEDINGS OF THE INTERNATIONAL CONFERENCE ON COMPUTER VISION, BERLIN, MAY 11 - 14, 1993, NR. CONF. 4, PAGE(S) 183 - 191 , INSTITUTE OF ELECTRICAL AND ELECTRONICS ENGINEERS XP000436231

## Description

This invention relates to methods of segmenting an original frame having blocks into a pertinent portion and a less pertinent portion, and to apparatus for generating an output signal representing an outline of pertinent information in a video frame for use in compressing digital signals.

Motion video can be represented by a digital signal in which a series of bits of information represent each video frame. As more bits of information are required to represent each frame, the cost and complexity of the hardware necessary to process the signals as well as the time required to process, store and transmit the signal are increased.

Image compression is a process which allows the digital signals representing images, such as frames of a motion video, to be transmitted in a coded form over a communications channel or to be stored on a medium, such as a CD-ROM, using fewer bits of data than would be required for an uncoded image. Because the storage and transmission of digital video signals is central to many applications, and because video signals requiring a large bitrate require more time and more equipment to process, either in storage or transmission, techniques to reduce the bitrate of digital video signals are vital to this advancing art.

To reduce the total amount of information required to reproduce a video image sequence (and thus the cost in time and equipment to reproduce the sequence), frames may be segmented into more pertinent portions and less pertinent portions. The data concerning the more pertinent portion is transmitted more frequently and/or at a higher resolution that the data concerning the less pertinent portion. Consequently, less information needs to be transferred than if all the data was transmitted at a higher rate. This also permits transmission of the signal for the video over a smaller bandwidth than if all the data was transmitted.

The primary segmentation techniques are motion-based segmentation (see S. Peleg & H. Rom, "Motion-Based Segmentation", Proc. IEEE Int'l Conf. Computer Vision and Pattern Recognition 109-113 (1990)), intensity-based segmentation (see R. Haralick and L. Shapiro, "Image Segmentation Techniques," 2 Computer Graphics, Vision, and Image Processing 100-32 (1985)), and disparity-based segmentation (see M. Waldowiski, "A New Segmentation Algorithm for Videophone Applications based on Stereo Image Pair," 39 IEEE Tran. Communication 1856-68 (1981)). The motion-based approach segments objects in a frame with similar velocities. This approach fails for scenes containing both foreground and background motion, causing the less-pertinent background to be treated as more pertinent. The intensity-based approach segments pictures based on intensity contrast and spatial position. This approach fails for textured objects because a single object may be segmented erroneously into multiple objects. The disparity-based approach measures the disparity between stereo images to segment objects. Point correspondence between the images is required to measure disparity but this is a complex and error-prone task. Consequently, none of these segmentation techniques are completely satisfactory.

In a typical video frame, the foreground contains more important information than the background. Consequently, it is desirable to transmit information corresponding to the foreground at a higher resolution or more frequently than background information. Each video frame is composed of picture elements, or "pixels," or "pels." Image focus (or its inverse, image defocus) is a measure of image sharpness for a portion of a frame, such as a pel or a block of pels. Image focus is measured easily from components having high frequencies, such as sharp edges: the less blurred an edge, the higher the focus. Consequently, the portion of the frame that is in focus can be determined by locating the edges that are less blurred. Assuming that the focused edges outline the foreground, the frame can be segmented into foreground (focused) and background (not focused or "defocused"). The foreground then can be treated as more pertinent and the background as less pertinent, transmitting or encoding only the foreground at a higher resolution or a higher frequency, thereby saving bit rate.

SIVAN Z ET AL: 'CHANGE DETECTION AND TEXTURE ANALYSIS FOR IMAGE SEQUENCE CODING' SIGNAL PROCESSING. IMAGE COMMUNICATION, vol. 6, no. 4, 1 August 1994 (1994-08-01), pages 357-376, XP000458727 ISSN: 0923-5965, pertains to a method for video coding. In an improvement of image sequence coders that replenish blocks even if they belong to a stationary background region, the coder detects such blocks and allows them to be copied, rather than replenished. Such copying reduces the bit rate of the coder.

According to one aspect of this invention there is provided a method as claimed in claim 1.

According to another aspect of this invention there is provided an apparatus as claimed in claim 19.

The present invention relates to a method and an apparatus for creating a segmented frame based on the focus measurement of portions of an original frame. A signal is acquired corresponding to an original frame. The original frame is composed of blocks and each block has an image attribute. The image attribute of each block is compared to the image attribute of another block. Each block is assigned a focus measurement based on the comparison of image attributes. The focus measurement of each block is then compared to a threshold focus measurement. Blocks that have a focus measurement above the threshold are designated as focused. Blocks that have a focus measurement below the threshold are designated as defocused. A segmented frame is then created based on the original frame and the designations as focused or defocused. Motion-based image segmentation may be employed in conjunction with focused-based segmentation to provide a combined motion/focus segmented frame.

The invention may be employed in a processing means that operates to process a digital signal corresponding to an original frame to generate the output signal corresponding to a segmented frame. An important aspect of any apparatus in accordance with the present invention is that it may be a processing system, firmware or hardware based.

One embodiment for using and/or distributing the present invention is as software. The software embodiment includes a plurality of processing system instructions which are stored to a storage medium. Preferred storage media include without limitation magnetic, optical, or semiconductor media, as well as suitably arranged combinations thereof. The processing system instructions are readable by a processing system, and upon execution, operate to control at least one processing system for segmenting a signal corresponding to an original frame using techniques in accordance with the principles of the present invention.

## BRIEF DESCRIPTION OF THE DRAWINGS

For a more complete understanding of the present invention, and the advantages thereof, reference is now made to the following Detailed Description of the Invention, taken in conjunction with the accompanying drawings in which like numbers designate like parts, and in which:

FIG. 1 is a block diagram of an embodiment of a motion video encoding system 100 of the invention;
FIG. 2 illustrates an isometric view of one exemplary processing system for compressing video data with the present invention;
FIG. 3 illustrates a block diagram of an exemplary microprocessing system which may be utilized in conjunction with the processing system of FIG. 2;
FIG. 4 is a schematic view of a simple lens model 300 upon which focus measurement theory is based;
FIG. 5 is a block diagram illustrating the overall operation of the prefilter 30;
FIG. 6 is a block diagram illustrating the initial smoothing operation performed at block 52 of the prefilter 30 ;
FIG. 7 is an initial bilevel focus measurement frame 70; FIG. 8 is a bilevel focus measurement frame 80 after a horizontal fill was performed on the initial bilevel focus measurement frame;
FIG. 9 is a bilevel focus measurement frame 90 after a vertical fill was performed on the bilevel focus measurement frame of FIG. 8;
FIG. 10 is a bilevel focus measurement frame 110 after the filling operations have stabilized;
FIG. 11 is a bilevel focus measurement frame showing an outline 125 of the template 111 of FIG. 10; and
FIG. 12 is a block diagram of the steps for creating a motion/focus segmented frame.

## DETAILED DESCRIPTION

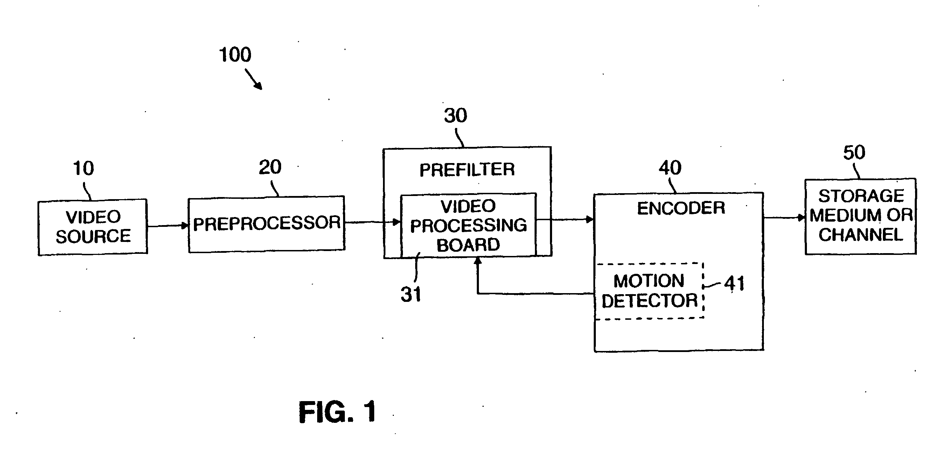

FIG. 1 is a block diagram of an embodiment of a motion video encoding system 100 of the invention. An analog video signal is generated at a video source 10, such as a video camera or a laser disc player, for a series of n pictures. The analog signal $P_n$ proceeds from the source 10 to a preprocessor 20, which includes an analog to digital converter, where the analog signal is transformed into a digital signal ("original frame signal"), representing a series of n frames. If necessary, the digital signal can be further converted by the preprocessor 20 to a digital signal with appropriate resolution as may be required depending on whether the signal will be sent over a communications channel or will be stored on a digital medium, such as a CD-ROM.

Each video frame of motion video comprises a matrix of picture elements, or "pels" or "pixels," f(x,y). Each frame is divided into a variable number of blocks depending on the number of pels per frame and the size of the blocks. As currently preferred, each block comprises a 4x4 matrix of pels. Of course, the blocks can comprise a different number and arrangement of pels. In particular, each block can comprise a single pel. Each pel comprises a luminance pel, Y, and two chrominance pels, $C_b$ and $C_r$. When the video signal is in digital form, each attribute or component of a block is represented by a numerical value. When blocks are "compared," it is the value of the corresponding block components or attributes that are compared.

A prefilter 30, including a computer processor such as a video processing board 31, is connected to the preprocessor 20 and receives the original frame signal from the preprocessor as an input signal. The prefilter 30 operates in accord with the present invention to segment the frame signal into foreground and background, thereby creating an output signal ("segmented frame signal") corresponding to a segmented frame. The segmented frame may be transmitted to an encoder 40, such as an H.261 or MPEG encoder, which translates the signal for the segmented frame into a compressed video bitstream. The compressed video signal generated by the encoder 40 is then stored in a storage medium 50, such as on an CD-ROM, or transmitted through a channel, such as an ISDN link.

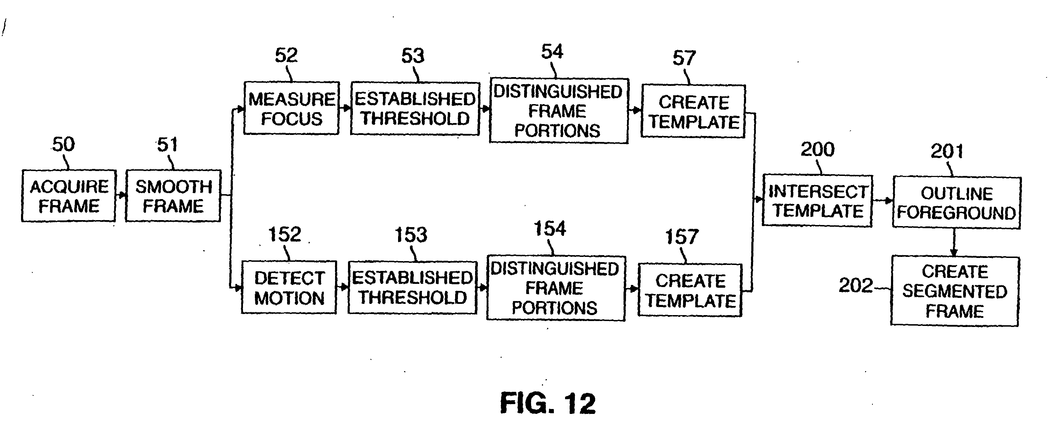

A motion detector 41, which may be part of the encoder 40, can be used to determine the extent to which each portion of the image is moving. Alternatively, the motion detector 41 may be a distinct piece of equipment, or may be incorporated into the prefilter 30. As discussed more fully below with respect to FIG. 12, the motion information generated by the motion detector 41 can be transferred to the prefilter 30 for use in further refining the segmented frame signal. As shown in FIG. 1, the encoder 40 is a distinct piece of equipment. However, it is understood that, typically, the encoder 40 and a decoder (not shown) are collectively called a codec, as is known in the art.

The encoder 40 creates the compressed signal using well-known compression techniques, e.g., the CCITT (Consultative Committee on International Telegraphy and Telephony) Recommendation H.261, Draft Revised Recommendation H.261-Video Codec for Audiovisual Services at px64 kbit/s, Study Group XV - Report R95 (May 1992), and the ISO/IEC MPEG standard. The H.261 by CCITT is a coding standard for audio-visual services at px64 kbit/s transmission rate. It has applications in videophone, videoconference and other audio visual transmission over ISDN networks. The MPEG algorithms, which include MPEG1 and MPEG2, have been developed by the Moving Picture Experts Group (MPEG), part of a joint technical committee of the International Standards Organization (ISO) and the International Electrotechnical Commission (IEC). The MPEG1 standards, as set forth in ESO-IEC JTC1SC2/WG11MPEG CD-11172 Committee Draft, 1991, are included as a part of MPEG2, as set forth in ISO-IEC JTC1/SC29/WG11/602 Committee Draft, 1993. The MPEG standards are intended for high quality digital video storage and high quality digital video transmission over a broadband network.

The present invention is presently intended for use with either an H.261 codec or an MPEG codec. It is to be noted, however, that the invention can also be applied to codecs using other video coding algorithms which share pertinent features of the H.261 or MPEG algorithm, as one skilled in the art would understand.

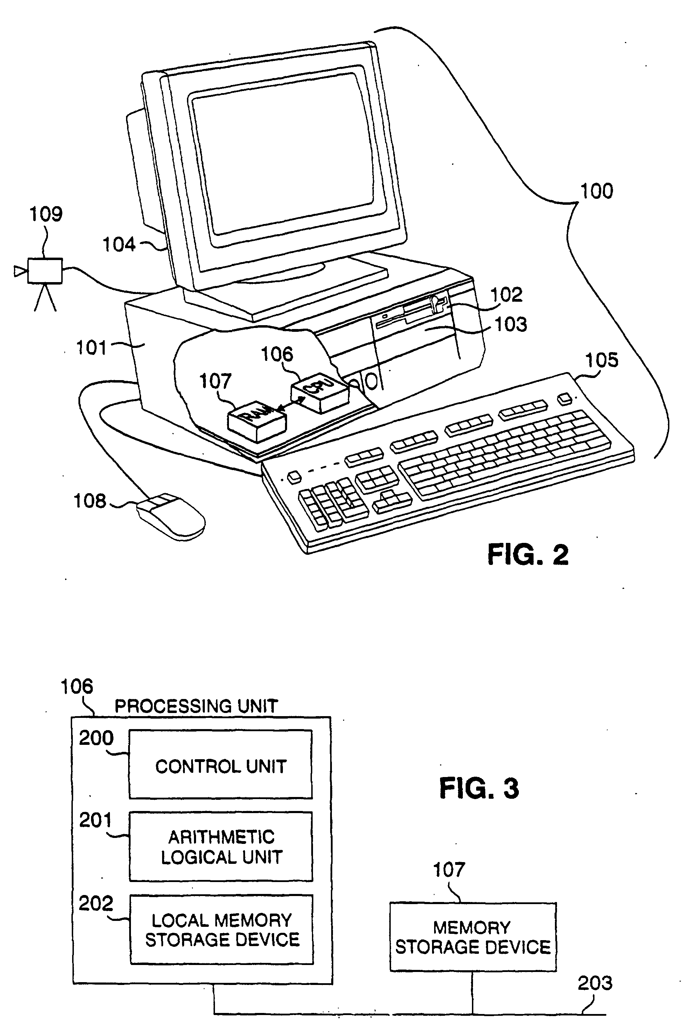

FIG. 2 is an isometric view of one exemplary processing system for compressing video data with the present invention. Processing system 100 is shown as a personal computer, and in one preferred embodiment is a model no. System 3333, by AT&T GIS, located in Dayton, Ohio. Processing system 100 may suitably be coupled with camera 109, and includes a hardware casing 101, having both a floppy disk drive 102 and a hard disk drive 103, a monitor 104 and a keyboard 105. Monitor 104 and keyboard 105 may be replaced by, or combined with, other conventional output devices and input devices.

Floppy disk drive 102 is operable to receive, read and write to external disks. Hard disk drive 103 is operable to provide fast access storage and retrieval. Floppy disk drive 102 may be replaced by or combined with any conventional suitably arranged structure for receiving and transmitting data and instructions, including without limitation, tape and compact disc drives, telephony systems and devices (including videophone technologies), and serial and parallel ports. In alternate embodiments, circuit boards, such as video processing board 31 of FIG. 1 for example, may be included.

The video source of 10 of FIG. 1 may include the camera 109 coupled with processing system 100 through one of the aforementioned ports. In alternate embodiments, input video frames may be received via one or more separate storage devices, such as a floppy disk or a compact disc, for example. An important aspect of the exemplary embodiment therefore is that data and/or instruction collection and segmentation need not occur coincidentally.

Note that hardware casing 101 is illustrated with a cut-away portion which includes a processing unit 106 suitably coupled with a memory storage device 107. Memory storage device 107 may be a random access memory ("RAM"), such as DRAM and/or SRAM memory storage devices, for example, or a read only memory ("ROM"), or other conventional suitably arranged memory storage devices. Although processing system 100 is illustrated as having a single processing unit, a single hard disk drive and a single memory unit, processing system 100 may be equipped with a plurality of processing units and/or suitably arranged memory storage devices operable to cooperatively carry out the principles of the present invention.

It should be noted that although the present invention is particularly advantageous for use in video compression, the present invention is also well-suited for use with other systems utilizing signal compression, including without limitation, processing system networks (including local and wide area networks), telephony systems (including videophone technologies), direct television systems, satellite systems, land-mobile radio systems, broadcast systems, information storage/retrieval systems, and the like.

Although a personal computer is utilized to illustrate one exemplary processing system embodiment, the principles of the present invention may be implemented within any processing system having conventional suitably arranged processing means for performing segmentation with the present invention, including without limitation, cameras, videophones, telephones, televisions, sophisticated calculators and, hand-held, laptop/notebook, mini, mainframe and super computers, including RISC and parallel processing architectures, as well as within processing system network combinations of the foregoing. Conventional processing system architecture is discussed more fully in William Stallings, Computer Organization and Architecture (MacMillan Publishing Co., 3rd ed. 1993).

Other preferred embodiments of the present invention include, without limitation, implementations in firmware or hardware. Such exemplary embodiments may include suitably arranged circuitry, including programmable logic devices, such as PALs (programmable array logic), PLAs (programmable logic arrays) and DSPs (digital signal processors). Other exemplary embodiments may also include FPGAs (field programmable gate arrays) and ASICs (application specific integrated circuits), for example.

FIG. 3 illustrates a block diagram of one exemplary microprocessing system which may be utilized in conjunction with processing system 100. The microprocessing system may be programmed to segment frame signals using techniques of the present invention. The microprocessing system includes a single processing unit 106 coupled via data bus 203 with a single memory storage device 107. Memory storage device 107 is operable to store one or more processing system instructions which processing unit 106 is operable to retrieve and execute. Processing unit 106 includes a control unit 200, an arithmetic logic unit ("ALU") 201, and a local memory storage device 202, such as, stackable cache or a plurality of registers, for example. Control unit 200 is operable to fetch processing system instructions from memory storage device 107. ALU 201 is operable to perform a plurality of operations, including addition and Boolean AND, needed to carry out those instructions. Local memory storage device 202 is operable to provide local high speed storage used for storing temporary results and control information.

The processing system 100 may be used to measure the focus of each block in the original frame for use in segmenting the frame signal, as discussed more fully below. It is known to use a "focus" measurement of a portion of a video frame, which is a function of depth, to determine object distances for monocular systems, such as camcorders. See A. Pentland, "A New Sense of Depth of Field," IEEE Trans. Pattern Analysis and Machine Intelligence, Vol. 9, No. 4, pp. 523-531, Jul 1993; M. Subbarao and G. Surya, "Depth from Defocus: A Spatial Domain Approach," Technical Report No. 92.12.03, Computer Vision Laboratory, Electrical Engineering Department, SUNY, Stony Brook, NY; herein ; and C. Swain, M. Bishay, A. Peters, and K. Kawamura, "Accuracy Improvement of Depth from Defocus using Fuzzy Logic," Technical Report No. CIS-94-02, Center for Intelligent Systems, Vanderbilt University, Nashville, TN 37235, May 1994.

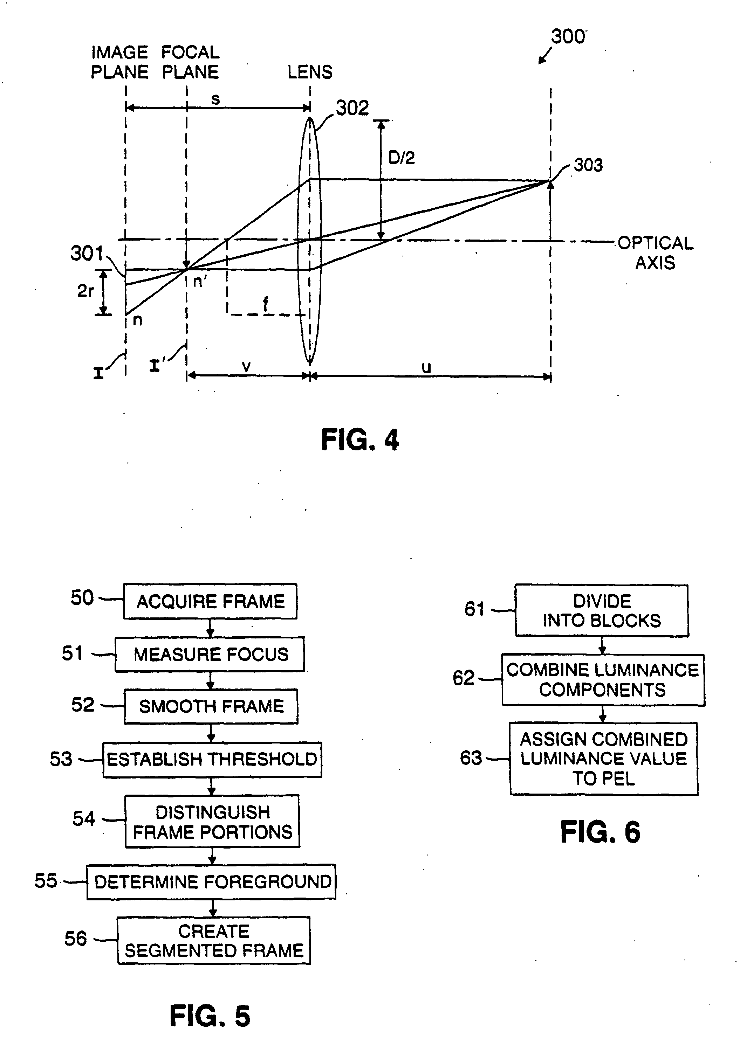

FIG. 4 is a schematic view of a simple lens model 300 upon which focus measurement theory is based. According to the lens law:

$$\frac{1}{f} = \frac{1}{u} + \frac{1}{v} \tag{1}$$

where f is the focal length, u is the distance between an object and the lens, and v is the distance between the lens and the focal plane. Object point 303 is not in focus because the image plane I of object point 303 is displaced from the focal plane I'. On the image plane, the object point 303 appears as a defocused or blurred image 301 called a blur circle. The blur circle size, 2r, and hence the amount of focus (or, conversely, defocus), can be expressed as a function of the depth u of the object point 303, as described in Equation (2):

$$\frac{1}{u} = \frac{1}{f} - \frac{1}{s} - \frac{2r}{sD} \tag{2}$$

where u is the distance between the object 303 and the lens 302, f is the focal length of the lens 302, s is the distance between the lens 302 and the image plane I, r is the radius of the blur circle 301 and D is the diameter of the lens 302.

The blurred image can be described by a convolution of the focused image with a point spread function $h(x, y)$ ["PSF"]. Ideally, the PSF is a cylindrical circularly symmetric function of unit volume, called a pillbox. Within the pillbox, the brightness is uniform such that

$$h(x,y) = \begin{cases} \dfrac{1}{\pi r^2} & if \ x^2 + y^2 \leq r^2 \\ \\ 0 & otherwise . \end{cases} \tag{3}$$

However, due to lens aberration and diffraction, the brightness is not uniform, but falls off gradually toward the boundary. So, the PSF is defined by a two-dimensional Gaussian function,

$$h(x,y) = \left( \frac{1}{2\pi\sigma^2} \right) e^{-\frac{1}{2}\frac{x^2+y^2}{\sigma^2}} \tag{4}$$

where $\sigma$ is a spatial constant corresponding to the defocus measurement. $\sigma$ is proportional to the blur circle $r$ such that:

$$\sigma = kr, \tag{5}$$

where $k$ is a proportionality constant. The unit volume of the PSF is 1. It has been proven experimentally that:

$$k = \frac{1}{\sqrt{2}} \tag{6}$$

Substituting into eq. 2:

$$\frac{1}{u} = \frac{1}{f} - \frac{1}{s} - \frac{2\sqrt{2}\sigma}{sD}. \tag{7}$$

Rearranging, the distance $u$ can be written as a function of the radius of the blurred circle $r$ (or the defocus measurement $\sigma$):

$$u = \frac{sDf}{sD - Df - 2\sqrt{2}\sigma f}. \tag{8}$$

When an image is in focus, its edges will be sharp and clearly defined. Consequently, the value of $\sigma$ at a focused edge will be lower. Similarly, the gradient of focus at a focused edge will also be higher because the image attributes of blocks proximate to the edge will vary greatly. In a blurred edge, the change of the image attributes across the edge will be smoother and, thus, the gradient will be smaller.

In accordance with an embodiment of the present invention, the blocks of a frame signal are segmented into foreground and background based on the depth measurement of each block. In particular, focused edges are detected. These edges are assumed to border the foreground portion of the frame. An outline is created from the focused edges. A signal including information concerning the outline and the original frame signal is created and sent to an encoder in which the foreground may be treated as more pertinent and the background treated as less pertinent.

FIG. 5 is a block diagram illustrating the overall operation of the prefilter 30 of the present invention. An original frame signal is acquired at block 50. The focus of each block is measured at block 51 in a manner known in the art, thereby creating a focus gradient. The original frame signal may be smoothed at block 52. Alternatively, the smoothing done at block 52 could be performed before the focus is measured, or at other points in the segmentation, or not at all. A threshold focus value is established at block 53. The focus value of each block is compared to the threshold focus value at block 54 to distinguish the focused blocks from the defocused blocks. Blocks having a focus value above the focus threshold are designated focused; blocks having a focus value below the focus threshold are designated defocused. The foreground is determined at block 55 based on the focused blocks. A segmented frame signal is created at block 56 based on the foreground.

FIG. 6 is a block diagram illustrating the initial smoothing operation performed at block 52 by the prefilter 3 of the current invention. The original frame is divided into blocks, preferably comprising a 4x4 matrix of pels, at block 61. Each pel may be assigned to more than one block such that there is block overlap. The luminance component of each pel is combined with the luminance component of each other pel in the block at block 62, as is known in the art. The combined luminance value is assigned to the location of one of the pels in the block as is known in the art. This process is continued for each block until each pel has been assigned a combined luminance value, thereby creating a smoothed frame signal.

The focus of each block in the original frame is measured at block 51. The focus measurement of each block may be determined in a traditional manner from edge strength, as explained in E. Krotov, "Focusing," 1 Intl J. Comp. Vision 223-37 (1987), or W. Pratt, Digital Image Processing 491-508 (Wiley & Sons 2d ed. 1991). As currently preferred, Sobel edge detection is employed.

Edges of a focused image in a frame will be indicated by changes or discontinuities in an image amplitude attribute across adjacent blocks. In particular, a gradient of the attribute is calculated. A spike or high value in the gradient is indicative of an edge. Since edges distinguish the foreground (which is focused) from the background (which is defocused), the attribute gradient is a gradient of focus or focus gradient. As currently preferred, the apparatus and method of the present invention detect edges based on changes or discontinuities in the luminance component of the blocks. Of course, changes or discontinuities in other image attributes could also be used to detect edges and still practice this invention.

The focus gradient along a selected line over a frame f(x,y) comprising a matrix of XxY pels is defined as:

$$G(x,y) = \frac{\partial f(x,y)}{\partial x} \cos\theta + \frac{\partial f(x,y)}{\partial y} \sin\theta \qquad (9)$$

where G(x,y) is the focus gradient, f(x,y) is the frame signal and θ is the angle of the line with respect to the horizontal axis. The focus gradient may be broken up into rows and columns such that the row gradient is defined as follows:

$$G_r(x,y) = f(x,y) - f(x,y\text{-}1) \qquad (10)$$

The column gradient is defined as follows:

$$G_c(x,y) + f(x,y) - f(x\text{-}1,y). \qquad (11)$$

Preferably, a Prewitt square root edge gradient, using a 3x3 pel edge gradient operator, is employed such that:

$$G(x,y)=\{[G_r(x,y)]^2 - [G_c(x,y)]^2\}^{\frac{1}{2}} \qquad (12)$$

where G(x,y) is the focus gradient, $G_r$ (x,y) is a row gradient, and $G_c$ (x,y) is a column gradient. The row gradient, $G_r$, is defined as follows:

$$G_r(x,y)=\frac{1}{K\cdot 2}\,[(A_2+KA_3+A_4)\text{-}(A_0+KA_7+A_6)] \qquad (13)$$

The column gradient, $G_c$, is defined as follows:

$$G_c(x,\ y)=\frac{1}{K\cdot 2}[(A_0+KA_1+A_2) - (A_0+KA_5+A_4)] \qquad (14)$$

where

$A_0 = a_0$ f(x-1, y+1)
$A_1 = a_1$ f(x, y+1)
$A_2 = a_2$ f(x+1, y+1)
$A_3 = a_3$ f(x+1, y )
$A_4 = a_4$ f(x+1, y-1)
$A_5 = a_5$ f(x, y-1)
$A_6 = a_6$ f(x-1, y-1)
$A_7 = a_7$ f(x-1, y)

The weighting factor $a_n$ is an empirically selected constant.
More generally, the luminance focus gradient G(x,y) over a continuous domain edge segment may be obtained by convolving the luminance values of the pels with an impulse response array as follows:

$$G(x,y)=F(x,y)=H(x,y). \qquad (15)$$

where F(x,y) is the luminance matrix for the frame, f(x,y), and H(x,y) is an impulse response array. Breaking this up into columns and rows,

$$G_r(x,y)=F(x,y)=H_r(x,y) \qquad (16)$$

and

$$G_c(x,y) = F(x,y) = H_c(x,y) \tag{17}$$

Numerous impulse response arrays can be selected for use with the point spread function, including pel difference, separated pel difference, Roberts, Prewitt and Frei-Chen impulse response arrays. Preferably, a Sobel impulse response array is employed. The Sobel impulse response arrays are as follows:

Row Gradient:

$$H_r = \frac{1}{4} \begin{bmatrix} 1 & 0 & -1 \\ 2 & 0 & -2 \\ 1 & 0 & -1 \end{bmatrix} \tag{18}$$

Column Gradient:

$$H_c = \frac{1}{4} \begin{bmatrix} -1 & -2 & -1 \\ 0 & 0 & 0 \\ 1 & 2 & 1 \end{bmatrix} \tag{19}$$

When the Sobel impulse response array is employed, the focus gradient, G(x,y), may be represented by S(x,y), a Sobel gradient. The value of the Sobel gradient at each pel is determined and an XxY matrix of Sobel gradient focus measurements is established. To improve the performance of the edge gradient generation operator, particularly in high noise environments, the neighborhood can be extended from a 3x3 matrix to a larger matrix.

Using traditional focus measurement or edge detection techniques, such as the Sobel gradient discussed above, may result in errors in edge detection. Focused edges with low magnitudes and defocused edges with high magnitudes may give similar focus measurements. The defocused edges, however, should have lower defocus measurements as follows. These results can be improved by modifying the focus measurement. A distinguishing feature between focused and defocused edges is edge width. Focused edges have steeper intensity gradients and smaller widths than defocused edges. The focus measurement may be modified as follows:

$$d(x,y) = \frac{\sum_x \sum_y |s(x,y)|^2}{w} \tag{8}$$

where d(x,y) is the focus measurement, S(x,y) is the magnitude of Sobel edge detection on a frame f(x,y), and w is the edge width in frame f(x,y). The width of an edge is calculated by counting the number of pels in an edge in the vertical direction and in the horizontal direction. The median horizontal and vertical widths are determined. An average width is calculated from the median vertical width and the median horizontal width. This average is used as the edge width. As the width of the edge increases (an indication of defocus), the focus measurement d(x,y) decreases. Consequently, an edge that has a high magnitude will not automatically be designated a focused edge. Rather, if the edge is wide, it will have a lower focus measurement. If the edge is narrow, it will have a higher focus measurement.

A value from 0 to 255 is assigned to each block. based on the value of the Sobel focus measurement. A focus threshold for the focus gradient is established at block 53. This threshold can be a predetermined value, or can be established based on the desired information transmission rate. For example, due to bandwidth restrictions, it may be required that only a certain percentage of the frame be designated as pertinent and transmitted at the higher rate. Consequently, the threshold may be selected such that the foreground template (discussed more fully below) corresponds to that percentage.

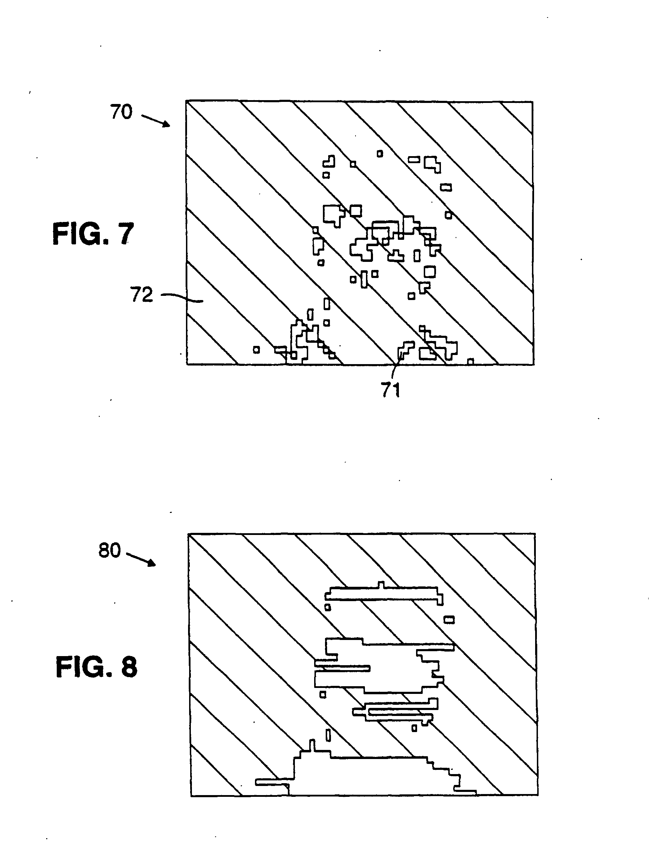

Portions of the frame are distinguished between focused and defocused at block 54 of FIG. 5. FIG. 7 is an initial bilevel focus measurement frame 75. A bilevel operation is performed on the output of the Sobel operator. Any block having a focus measurement above the threshold is defined as focused. Any block having a focus measurement below the threshold is defined as defocused. In FIG. 7, the focused blocks are depicted as white (e.g., pel 71) and the defocused blocks are lined as black (e.g., pel 72). Consequently, each block is determined to be either focused or defocused. As currently preferred, a single threshold is employed and the frame is distinguished between focused and defocused portions. Alternatively, a second threshold could be employed such that defocused, focused and intermediate portions are established. Each portion type could be transmitted at a different bitrate or different frequency, as is desired for the particular application. Of course, any number of such thresholds could be employed, segmenting the frame into various levels of focus.

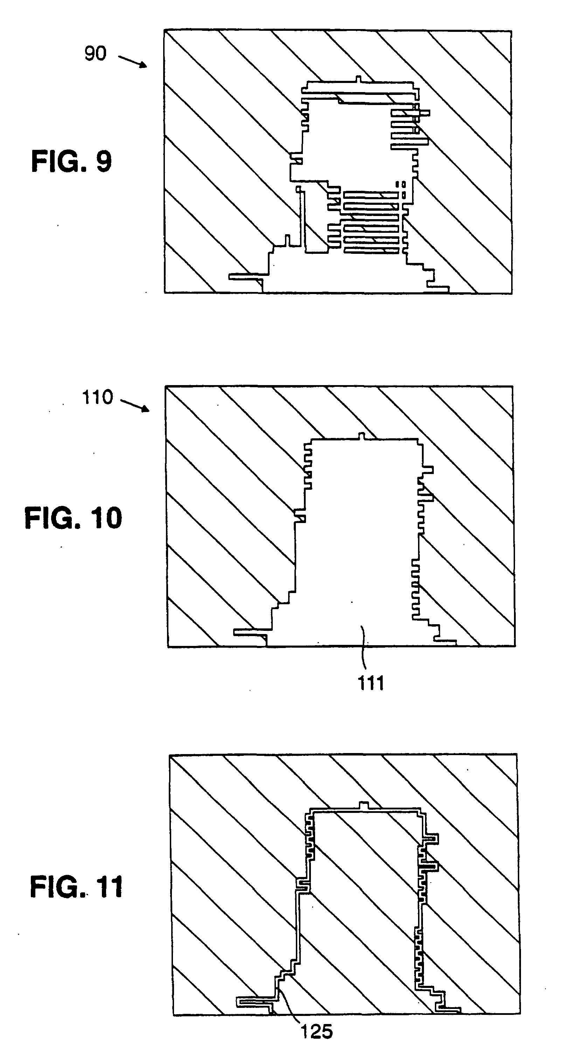

The portion of the frame to be designated foreground is determined at block 55 of FIG. 5. Preferably, regions of the frame between the focused blocks of FIG. 7 are also designated as focused, thereby creating a contiguous template. The template overlays the portion of the frame to be designated foreground. FIG. 8 is a bilevel focus measurement frame 80 after a horizontal fill was performed on the initial bilevel focus measurement frame. Horizontal bands are inserted between focused blocks that are situated at the same horizontal level. FIG. 9 is a bilevel focus measurement frame 90 after a vertical fill was performed on the bilevel focus measurement frame 80 of FIG. 8. Vertical bands are inserted between focused blocks that are situated at the same vertical level. The horizontal and vertical fill steps are reiterated until the image stabilizes. FIG. 10 is a bilevel focus measurement frame 110 after the filling operations have stabilized. The stabilized image is the foreground template 111. The foreground template could be generated in other ways, of course. For example, fixed shapes could be fit onto the focused blocks of FIG. 8 to create an estimate of the focused region. This, or other template generation techniques may be employed to save computational time.

An outline of the foreground template 111 is then generated. The blocks at the periphery of the foreground template 111 shown in FIG. 11 are designated as the outline 125, shown in FIG. 12. An outline signal corresponding to the outline is generated by the computer processor. All the blocks of the outline and the blocks contained within the outline are designated as foreground. A signal corresponding to the outline is generated by the processing unit 106.

A segmented frame signal $f_n$ is created at block 56 of FIG. 5 by the processing unit 106 from the original frame signal $f_n$ and the outline signal. The segmented frame signal then is sent to an encoder or a recording medium.

In accord with another aspect of the invention, the focus-based segmentation discussed above may be combined with motion-based segmentation to create a motion/focus segmented frame signal. FIG. 12 is a block diagram of the steps for creating such a motion/focus segmented frame. In block 152, motion is detected in the original frame. In one acceptable method of segmentation based on motion in the video sequence, explained in B.G. Haskell, P.L. Gordon, R.L. Schmidt and J.V. Scattaglia, IEEE Trans. on Communications, Vol. Com-25, No. 11 1977, a motion detector 41 is used to distinguish the stationary blocks in each frame of a motion video sequence from the moving blocks in that frame. In block 153, a motion threshold is established. Analogous to the focus threshold discussed above, the motion threshold may be a predetermined constant. Alternatively, the motion threshold may be established in view of the available bandwidth such that a certain percent of the frame is designated moving (i.e., pertinent). The frame is distinguished into moving and stationary blocks in view of the motion threshold at block 154. A series of horizontal and vertical fill operations are performed at block 157 until a stable motion template is formed.

The motion-based template is intersected with the focus-based template at block 200. That is, only portions of the image that are designated pertinent in both templates are designated pertinent in the combined motion/focus template. An outline for the intersected segment is determined and an outline signal generated at block 201. The original frame signal is then combined with the outline signal to create a motion/focus segmented frame at block 202 for transmission, storage or reproduction.

## Claims

1. A method of segmenting an original frame (70) having blocks into a pertinent portion and a less pertinent portion, comprising:

   acquiring (50) a signal corresponding to the original frame (70) which signal comprises an image artribute for each block;
   comparing the image attribute of each block to the image attribute of another block,
   providing (51) for each block a focus measurement (eq.8) based at least in part on the attribute comparison, wherein the focus measurement is a function (d) comprising a ratio of an estimate of an edge width (w) and the magnitude (5) of an edge focus gradient and associating a focus value to said each block based on said focus measurements,
   comparing (54) the focus value of each block to a focus threshold;
   designating (54) the blocks having a focus value above the threshold as focused and designating (54) the blocks having a focus value below the threshold as defocused; and
   creating (56) a segmented frame (110) based, at least in part, on the designations.

2. The method of claim 1 wherein the image attribute is a luminance component.

3.  The method of claim 2 wherein each block comprises a single pel.

4.  The method of claim 1 wherein the image attribute is compared with the image attribute of an adjacent block.

5.  The method of claim 1 further comprising the step of smoothing (52) the original frame signal (70).

6.  The method of claim 5 wherein said smoothing the frame signal comprises averaging the luminance component of a block with a luminance component of an adjacent block.

7.  The method of claim 1 wherein said comparing the image attribute comprises convolving a matrix of pels of a block with an impulse response array.

8.  The method of claim 7 wherein the impulse response array is a Sobel response array.

9.  The method of claim 8 wherein the focus measurement is inversely proportional to the edge width.

10. The method of claim 1 further comprising the step of calculating (53) the threshold.

11. The method of claim 10 wherein the threshold calculation is based on a selected percentage of the frame.

12. The method of claim 11 wherein the selected percentage is based on a bandwidth available for transmission.

13. The method of claim 1 further comprising creating an outline (125) of the focused portions based on the designations wherein the segmented frame is created (56) based, at least in part, on the outline.

14. The method of claim 1 further comprising:

    measuring (152) the motion of each block based on plural ones of said original frames;
    comparing the motion measure of each block to a motion threshold; and
    designating (154) the blocks having a motion measure above the motion threshold as moving and designating (154) the blocks having a motion measure below the morion; threshold as not moving;

    wherein the segmented frame is created (202) based, at least in part, on the motion designation.

15. The method of claim 14 further comprising:

    creating (57) a focus template based on the focus designations;
    creating (157) a motion template based on the motion designations; and
    creating (200) a combined template based on the focus template and the motion template;

    wherein the segmented frame is created (202) based on the combined template.

16. The method of claim 15 wherein the combined template is the intersection of the motion template and the focus template.

17. The method of claim 16 further comprising outlining (201) the combined template and generating an outline signal, wherein the segmented frame is created (202) based on the outline signal.

18. The method of claim 1 wherein said focus threshold is a first focus threshold and further comprising the steps of:

    comparing the focus value of each block to a second focus threshold ; and
    designating the blocks having a focus value between the first focus threshold and the second focus threshold as intermediate;

    wherein the segmented frame is created based, at least in part, on the designations as focused, intermediate or defocused.

19. Apparatus for generating an output signal representing an outline of pertinent information in a video frame (70) for use in compressing digital signals, said apparatus comprising:

receiving means for receiving a digital signal, said received digital signal representing a plurality of blocks, each block having an image attribute;

storage means for storing the image attribute of the blocks; and

processing means (106) for processing said received digital signal to generate said output signal, said processing means being operable to:

store at least a matrix of attributes;

calculate a focus gradient based, at least in part, on the stored matrix;

estimate an edge width;

calculate (51) a focus measurement (eq-8) that is a function comprising a ratio of the focus gradient and the edge width;

associate with each block a focus value based on the focus measurement;

compare (54) each focus value with a focus threshold;

designate (54) each block having a focus value above the focus threshold as focused;

designate (54) each block having a focus value below the focus threshold as defocused; and

define a focus outline (125) based, at least in part, on the focused blocks.

20. The apparatus of claim 19 wherein the processing means if further operable to:

define (57) a focus template by designating the regions between the focused blocks as focused;

calculate (152) a motion gradient based on plural ones of said frames and, at least in part, on the stored matrix;

associate (152) with each block a motion value based on the motion gradient;

compare (154) each motion value with a motion threshold;

designate (154) each block having a motion value above the motion threshold as moving;

designate (154) each block having a motion value below the threshold as not moving;

define (157) a motion template based, at least in part, on the moving blocks; and

define (201) a motion/focus outline based on the focus template and the motion template.

21. The apparatus of claim 19 wherein the attribute is a luminance component.

22. The apparatus of claim 19 wherein the processing means is further operable to calculate the focus threshold.

23. The apparatus of claim 19 wherein the processing means is further operable to calculate the focus threshold based on a selected portion of the video frame.

24. The apparatus of claim 19 wherein the processing means is further operable to calculate the focus threshold based on a predetermined bandwidth.

**Patentansprüche**

1. Verfahren zum Segmentieren eines ursprünglichen Einzelbildes (70) mit Blöcken in einen relevanten Teil und einen weniger relevanten Teil, mit den folgenden Schritten:

Erfassen (50) eines Signals, das dem ursprünglichen Einzelbild (70) entspricht, wobei das Signal für jeden Block ein Bildattribut umfaßt;

Vergleichen des Bildattributs jedes Blocks mit dem Bildattribut eines anderen Blocks;

Bereitstellen (51) einer Fokusmessung (z.B. 8) für jeden Block, die mindestens zum Teil auf dem Attributvergleich basiert, wobei die Fokusmessung eine Funktion (d) ist, die ein Verhältnis einer Abschätzung einer Randbreite (w) und des Betrags (5) eines Randfokusgradienten umfaßt, und Zuordnen eines Fokuswerts zu jedem Block auf der Grundlage der Fokusmessung;

Vergleichen (54) des Fokuswerts jedes Blocks mit einer Fokusschwelle;

Kennzeichnen (54) der Blöcke mit einem Fokuswert über der Schwelle als fokussiert und Kennzeichnen (54) der Blöcke mit einem Fokuswert unter der Schwelle als nicht fokussiert; und

Erzeugen (56) eines segmentierten Einzelbildes (110), das mindestens zum Teil auf den Kennzeichnungen basiert.

2. Verfahren nach Anspruch 1, wobei das Bildattribut eine Luminanzkomponente ist.

3. Verfahren nach Anspruch 2, wobei jeder Block einen einzelnen Pel umfaßt.

4. Verfahren nach Anspruch 1, wobei das Bildattribut mit den Bildattribut eines angrenzenden Blocks verglichen wird.

5. Verfahren nach Anspruch 1, weiterhin mit dem Schritt des Glättens (52) des ursprünglichen Einzelbildsignals (70).

6. Verfahren nach Anspruch 5, wobei das Glätten des Einzelbildsignals ein Mitteln der Luminanzkomponente eines Blocks mit einer Luminanzkomponente eines angrenzenden Blocks umfaßt.

7. Verfahren nach Anspruch 1, wobei das Vergleichen des Bildattributs das Falten einer Matrix von Pels eines Blocks mit einem Impulsantwortarray umfaßt.

8. Verfahren nach Anspruch 7, wobei das Impulsantwortarray ein Sobel-Antwortarray ist.

9. Verfahren nach Anspruch 8, wobei die Fokusmessung umgekehrt proportional zu der Randbreite ist.

10. Verfahren nach Anspruch 1, weiterhin mit dem Schritt des Berechnens (53) der Schwelle.

11. Verfahren nach Anspruch 10, wobei die Schwellenberechnung auf einem gewählten Prozentsatz des Einzelbildes basiert.

12. Verfahren nach Anspruch 11, wobei der gewählte Prozentsatz auf einer für die Übertragung verfügbaren Bandbreite basiert.

13. Verfahren nach Anspruch 1, bei dem weiterhin auf der Grundlage der Kennzeichnungen ein Umriß (125) der fokussierten Teile erzeugt wird, wobei das segmentierte Einzelbild (56) mindestens zum Teil auf der Grundlage des Umrisses erzeugt wird.

14. Verfahren nach Anspruch 1, weiterhin mit den folgenden Schritten:

Messen (152) der Bewegung jedes Blocks auf der Grundlage mehrerer der ursprünglichen Einzelbilder;

Vergleichen des Bewegungsmaßes jedes Blocks mit einer Bewegungsschwelle; und

Kennzeichnen (154) der Blöcke mit einem Bewegungsmaß über der Bewegungsschwelle als bewegt und Kennzeichnen (154) der Blöcke mit einem Bewegungsmaß unter der Bewegungsschwelle als nicht bewegt;

wobei das segmentierte Einzelbild mindestens zum Teil auf der Grundlage der Bewegungskennzeichnung erzeugt (202) wird.

15. Verfahren nach Anspruch 14, weiterhin mit den folgenden Schritten:

Erzeugen (57) einer Fokusschablone auf der Grundlage der Fokuskennzeichnungen;

Erzeugen (157) einer Bewegungsschablone auf der Grundlage der Bewegungskennzeichnungen; und

Erzeugen (200) einer kombinierten Schablone auf der Grundlage der Fokusschablone und der Bewegungsschablone;

wobei das segmentierte Einzelbild auf der Grundlage der kombinierten Schablone erzeugt (202) wird.

**16.** Verfahren nach Anspruch 15, wobei die kombinierte Schablone die Schnittmenge der Bewegungsschablone und der Fokusschablone ist.

**17.** Verfahren nach Anspruch 16, bei dem weiterhin die kombinierte Schablone umrissen (201) und ein Umrißsignal erzeugt wird, wobei das segmentierte Einzelbild auf der Grundlage des Umrißsignals erzeugt (202) wird.

**18.** Verfahren nach Anspruch 1, wobei die Fokusschwelle eine erste Fokusschwelle ist, und weiterhin mit den folgenden Schritten:

Vergleichen des Fokuswerts jedes Blocks mit einer zweiten Fokusschwelle; und

Kennzeichnen der Blöcke mit einem Fokuswert zwischen der ersten Fokusschwelle und der zweiten Fokusschwelle als dazwischenliegend;

wobei das segmentierte Einzelbild mindestens zum Teil auf der Grundlage der Kennzeichnungen als fokussiert, dazwischenliegend oder nicht fokussiert erzeugt wird.

**19.** Vorrichtung zum Erzeugen eines Ausgangssignals, das einen Umriß relevanter Informationen in einem Videoeinzelbild (70) darstellt, zur Verwendung bei der Komprimierung digitaler Signale, wobei die Vorrichtung folgendes umfaßt:

ein Empfangsmittel zum Empfangen eines digitalen Signals, wobei das empfangene digitale Signal mehrere Blöcke darstellt, die jeweils ein Bildattribut aufweisen;

ein Speichermittel zum Speichern des Bildattributs der Blöcke; und

ein Verarbeitungsmittel (106) zum Verarbeiten des empfangenen digitalen Signals, um das Ausgangssignal zu erzeugen, wobei das Verarbeitungsmittel betreibbar ist, um folgendes durchzuführen:

Speichern mindestens einer Matrix von Attributen;

Berechnen eines Fokusgradienten, der mindestens zum Teil auf der gespeicherten Matrix basiert;

Abschätzen einer Randbreite;

Berechnen (51) einer Fokusmessung (z.B. 8), die eine Funktion ist, die ein Verhältnis des Fokusgradienten und der Randbreite umfaßt;

Zuordnen eines Fokuswerts zu jedem Block auf der Grundlage der Fokusmessung;

Vergleichen (54) jedes Fokuswerts mit einer Fokusschwelle;

Kennzeichnen (54) jedes Blocks mit einem Fokuswert über der Fokusschwelle als fokussiert;

Kennzeichnen (54) jedes Blocks mit einem Fokuswert unter der Fokusschwelle als nicht fokussiert; und

Definieren eines Fokusumrisses (125), der mindestens zum Teil auf den fokussierten Blöcken basiert.

**20.** Vorrichtung nach Anspruch 19, wobei das Verarbeitungsmittel weiterhin betreibbar ist, um folgendes durchzuführen:

Definieren (57) einer Fokusschablone durch Kennzeichnen der Bereiche zwischen den fokussierten Blöcken als fokussiert;

Berechnen (152) eines Bewegungsgradienten, der auf mehreren der Einzelbilder und mindestens zum Teil auf der gespeicherten Matrix basiert;

Zuordnen (152) eines Bewegungswerts zu jedem Block auf der Grundlage des Bewegungsgradienten;

**13**

Vergleichen (154) jedes Bewegungswerts mit einer Bewegungsschwelle;

Kennzeichnen (154) jedes Blocks mit einem Bewegungswert über der Bewegungsschwelle als bewegt;

Kennzeichnen (154) jedes Blocks mit einem Bewegungswert unter der Schwelle als unbewegt;

Definieren (157) einer Bewegungsschablone, die mindestens zum Teil auf den bewegten Blöcken basiert; und

Definieren (201) eines Bewegungs-/Fokusumrisses auf der Grundlage der Fokusschablone und der Bewegungsschablone

21. Vorrichtung nach Anspruch 19, wobei das Attribut eine Luminanzkomponente ist.

22. Vorrichtung nach Anspruch 19, wobei das Verarbeitungsmittel weiterhin betreibbar ist, um die Fokusschwelle zu berechnen.

23. Vorrichtung nach Anspruch 19, wobei das Verarbeitungsmittel weiterhin betreibbar ist, um die Fokusschwelle auf der Grundlage eines gewählten Teils des Videoeinzelbildes zu berechnen.

24. Vorrichtung nach Anspruch 19, wobei das Verarbeitungsmittel weiterhin betreibbar ist, um die Fokusschwelle auf der Grundlage einer vorbestimmten Bandbreite zu berechnen.

**Revendications**

1. Procédé de segmentation d'une image originale (70) comportant des blocs en une partie pertinente et une partie moins pertinente, comprenant :

l'acquisition (50) d'un signal correspondant à l'image originale (70), lequel signal comprend un attribut d'image pour chaque bloc ;
la comparaison de l'attribut d'image de chaque bloc à l'attribut d'image d'un autre bloc ;
la fourniture (51) pour chaque bloc d'une mesure de focalisation (équation 8) basée au moins en partie sur la comparaison des attributs, la mesure de la focalisation étant une fonction (d) comprenant un rapport d'une estimation d'une largeur de bord (W) et de l'amplitude (S) d'un gradient de focalisation de bord, et l'association d'une valeur de focalisation à chaque dit bloc sur la base de ladite mesure de focalisation ;
la comparaison (54) de la valeur de focalisation de chaque bloc à un seuil de focalisation ;
la caractérisation (54) des blocs dont la valeur de focalisation est supérieure au seuil comme étant focalisés et la caractérisation (54) des blocs dont la valeur de focalisation est inférieure au seuil comme étant défocalisés ; et
la création (56) d'une image segmentée (110) sur la base, au moins en partie, de ces caractérisations.

2. Procédé selon la revendication 1, dans lequel l'attribut d'image est une composante de luminance.

3. Procédé selon la revendication 2, dans lequel chaque bloc comprend un seul pixel.

4. Procédé selon la revendication 1, dans lequel l'attribut d'image est comparé à l'attribut d'image d'un bloc adjacent.

5. Procédé selon la revendication 1, comprenant en outre l'étape de lissage (52) du signal d'image originale (70).

6. Procédé selon la revendication 5, dans lequel ledit lissage du signal d'image comprend le moyennage de la composante de luminance d'un bloc avec une composante de luminance d'un bloc adjacent.

7. Procédé selon la revendication 1, dans lequel ladite comparaison de l'attribut d'image comprend la convolution d'une matrice de pixels d'un bloc avec un tableau de réponses impulsionnelles.

8. Procédé selon la revendication 7, dans lequel le tableau de réponses impulsionnelles est un tableau de réponses de Sobel.

**9.** Procédé selon la revendication 8, dans lequel la mesure de la focalisation est inversement proportionnelle à la largeur de bord.

**10.** Procédé selon la revendication 1, comprenant en outre l'étape de calcul (53) du seuil.

**11.** Procédé selon la revendication 10, dans lequel le calcul du seuil est basé sur un pourcentage sélectionné de l'image.

**12.** Procédé selon la revendication 11, dans lequel le pourcentage sélectionné est basé sur une largeur de bande disponible pour la transmission.

**13.** Procédé selon la revendication 1, comprenant en outre la création d'un contour (125) des parties focalisées sur la base des caractérisations, dans lequel l'image segmentée est créée (56) sur la base, au moins en partie, du contour.

**14.** Procédé selon la revendication 1, comprenant en outre :

la mesure (152) du mouvement de chaque bloc sur la base de plusieurs desdites images originales ;
la comparaison de la mesure du mouvement de chaque bloc à un seuil de mouvement ; et
la caractérisation (154) des blocs dont la mesure du mouvement est supérieure au seuil de mouvement comme étant en mouvement et la caractérisation (154) des blocs dont la mesure du mouvement est inférieure au seuil de mouvement comme étant immobiles ;

dans lequel l'image segmentée est créée (202) sur la base, au moins en partie, de la caractérisation du mouvement.

**15.** Procédé selon la revendication 14, comprenant en outre :

la création (57) d'un gabarit de focalisation sur la base des caractérisations de focalisation ;
la création (157) d'un gabarit de mouvement sur la base des caractérisations de mouvement ; et
la création (200) d'un gabarit combiné sur la base du gabarit de focalisation et du gabarit de mouvement ;

dans lequel l'image segmentée est créée (202) sur la base du gabarit combiné.

**16.** Procédé selon la revendication 15, dans lequel le gabarit combiné est l'intersection du gabarit de mouvement et du gabarit de focalisation.

**17.** Procédé selon la revendication 16, comprenant en outre le contourage (201) du gabarit combiné et la génération d'un signal de contour, dans lequel l'image segmentée est créée (202) sur la base du signal de contour.

**18.** Procédé selon la revendication 1, dans lequel ledit seuil de focalisation est un premier seuil de focalisation, et comprenant en outre les étapes de :

comparaison de la valeur de focalisation de chaque bloc à un deuxième seuil de focalisation ; et
caractérisation des blocs dont la valeur de focalisation est comprise entre le premier seuil de focalisation et le deuxième seuil de focalisation comme étant intermédiaires ;

dans lequel l'image segmentée est créée sur la base, au moins en partie, des caractérisations, focalisée, intermédiaire ou défocalisée.

**19.** Appareil de génération d'un signal de sortie représentant un contour d'informations pertinentes dans une image vidéo (70) destiné à être utilisé pour la compression de signaux numériques, ledit appareil comprenant :

un moyen de réception pour recevoir un signal numérique, ledit signal numérique reçu représentant une pluralité de blocs, chaque bloc possédant un attribut d'image ;
un moyen de stockage pour stocker l'attribut d'image des blocs ; et
un moyen de traitement (106) pour traiter ledit signal numérique reçu afin de générer ledit signal de sortie, ledit moyen de traitement pouvant être mis en oeuvre pour :

stocker au moins une matrice d'attributs ;

calculer un gradient de focalisation sur la base, au moins en partie, de la matrice stockée ;

estimer une largeur de bord ;

calculer (51) une mesure de focalisation (équation 8) représentant une fonction comprenant un rapport du gradient de focalisation et de la largeur de bord ;

associer à chaque bloc une valeur de focalisation sur la base de la mesure de focalisation ;

comparer (54) chaque valeur de focalisation à un seuil de focalisation ;

caractériser (54) chaque bloc dont la valeur de focalisation est supérieure au seuil de focalisation comme étant focalisé ;

caractériser (54) chaque bloc dont la valeur de focalisation est inférieure au seuil de focalisation comme étant défocalisé ; et

définir un contour de focalisation (125) sur la base, au moins en partie, des blocs focalisés.

20. Appareil selon la revendication 19, dans lequel le moyen de traitement peut en outre être mis en oeuvre pour :

définir (57) un gabarit de focalisation en caractérisant les régions entre les blocs focalisés comme étant focalisées ;

calculer (152) un gradient de mouvement sur la base de plusieurs desdites images et, au moins en partie, de la matrice stockée ;

associer (152) à chaque bloc une valeur de mouvement sur la base du gradient de mouvement ;

comparer (154) chaque valeur de mouvement à un seuil de mouvement ;

caractériser (154) chaque bloc dont la valeur de mouvement est supérieure au seuil de mouvement comme étant en mouvement ;

caractériser (154) chaque bloc dont la valeur de mouvement est inférieure au seuil comme étant immobile ;

définir (157) un gabarit de mouvement sur la base, au moins en partie, des blocs en mouvement ; et

définir (201) un contour de mouvement / focalisation sur la base du gabarit de focalisation et du gabarit de mouvement.

21. Appareil selon la revendication 19, dans lequel l'attribut est une composante de luminance.

22. Appareil selon la revendication 19, dans lequel le moyen de traitement peut en outre être mis en oeuvre pour calculer le seuil de focalisation.

23. Appareil selon la revendication 19, dans lequel le moyen de traitement peut en outre être mis en oeuvre pour calculer le seuil de focalisation sur la basé d'une partie sélectionnée de l'image vidéo.

24. Appareil selon la revendication 19, dans lequel le moyen de traitement peut en outre être mis en oeuvre pour calculer le seuil de focalisation sur la base d'une largeur de bande prédéterminée.

**FIG. 1**

EP 0 741 496 B1

**FIG. 2**

100

109

104

101

102

103

106

107

105

108

106

PROCESSING UNIT

200 CONTROL UNIT

**FIG. 3**

201 ARITHMETIC LOGICAL UNIT

107

202 LOCAL MEMORY STORAGE DEVICE

MEMORY STORAGE DEVICE

203

IMAGE FOCAL
PLANE PLANE        LENS

300

302

D/2

303

OPTICAL
AXIS

301

n'

2r

f

n

I    I'        v              u

**FIG. 4**

50 — ACQUIRE FRAME

51 — MEASURE FOCUS

52 — SMOOTH FRAME

53 — ESTABLISH THRESHOLD

54 — DISTINGUISH
     FRAME PORTIONS

55 — DETERMINE FOREGROUND

56 — CREATE
     SEGMENTED FRAME

**FIG. 5**

61 — DIVIDE
     INTO BLOCKS

62 — COMBINE LUMINANCE
     COMPONENTS

63 — ASSIGN COMBINED
     LUMINANCE VALUE
     TO PEL

**FIG. 6**

FIG. 7

FIG. 8

**FIG. 9**

90

**FIG. 10**

110

111

**FIG. 11**

125

| ACQUIRE FRAME | SMOOTH FRAME |
|---|---|
| 50 | 51 |

| MEASURE FOCUS | ESTABLISHED THRESHOLD | DISTINGUISHED FRAME PORTIONS | CREATE TEMPLATE |
|---|---|---|---|
| 52 | 53 | 54 | 57 |

| DETECT MOTION | ESTABLISHED THRESHOLD | DISTINGUISHED FRAME PORTIONS | CREATE TEMPLATE |
|---|---|---|---|
| 152 | 153 | 154 | 157 |

| INTERSECT TEMPLATE | OUTLINE FOREGROUND |
|---|---|
| 200 | 201 |

| CREATE SEGMENTED FRAME |
|---|
| 202 |

**FIG. 12**